# EUROPÄISCHE PATENTSCHRIFT

(11) **EP 0 937 930 B1**
(45) Veröffentlichungstag und Bekanntmachung des Hinweises auf die Patenterteilung: **08.09.2004**
(21) Anmeldenummer: 99101992.8
(22) Anmeldetag: 01.02.1999
(51) Int. Cl.: F16L 3/233, F16L 3/137

(54) **Kabelbinder für die Bündelung oder Befestigung von Leitungen**
Cable tie for bundling or fixing lines
Serre-câble pour botteler ou fixer des lignes

(30) Priorität: 18.02.1998 DE 19806628
(43) Veröffentlichungstag der Anmeldung: 25.08.1999
(73) Patentinhaber: Airbus Deutschland GmbH, 21129 Hamburg (DE)
(72) Erfinder: Guthke, Hans-Peter, 21720 Steinkirchen (DE)
(74) Vertreter: Hansmann, Dierk, Dipl.-Ing.

(56) Entgegenhaltungen:
- WO-A-90/02284
- GB-A- 1 224 623
- US-A- 4 510 650
- US-A- 5 131 613
- US-A- 5 193 254

## Beschreibung

Die Erfindung bezieht sich auf einen Kabelbinder für die Bündelung oder Befestigung von Leitungen im Maschinen-, Kraftwerks-, Schiffs- und Fahrzeugbau, der sich bevorzugt als Hochtemperatur-Kabelbinder im Energieerzeugungs- und Verteilungsbereich einsetzen läßt.

Im Flugzeugbau werden Kabelbinder verwendet, die aufgrund ihrer konstruktiven Merkmale und ihrer Materialeigenschaften nicht für alle elektrische Leitungs- und -bündelbefestigungen im Energieerzeugungs- und Verteilungsbereich eines Flugzeuges technologisch berücksichtigt werden können. Diese Kabelbinder bestehen aus Polyamid, die bislang nur in Temperaturbereichen von - 55°C bis + 135°C eingesetzt werden. Da sie sich standardmäßig nicht für die Befestigung aller elektrischen Leitungswege (Leitungs-Routen) eignen, werden bei bestimmten Wegen, die höheren Temperaturen (> + 135°C) ausgesetzt sind, traditionelle Schellenbefestigungen der Leitungen bzw. Leitungsbündel und auch teilweise (in Abhängigkeit vom Einbauort) nur in Verbindung mit besonderen Halterungskomponenten bevorzugt. Auch im Klimabereich werden die Rohrverbindungen zur Gewährleistung einer festen Verbindung (bzw. einer ausreichenden Befestigung) mit Schellen oder äquivalent befestigt. Den bekannten Kabelbindern haftet zudem der Nachteil an, daß bei einer Befestigung von runden / ovalen Teilen [Rohrleitung(en) oder elektrische Leitung(en) und -sbündel] bzw. einer (befestigten) Verbindung [(Rohr-)Leitung(en)] ein Hohlraum mit dreieckartigem Querschnitt gebildet wird, den das diese Teile umgebende Kabelbinderband unterhalb dem Kabelbinderkopf einschließt, der durch den nicht umspannten Teilebereich begrenzt wird. Dieser Hohlraum kann durch das unvermeidbare Einwirken bestimmter Umgebungseinflüsse (Feuchtigkeit und Verschmutzung der Umgebungsluft ect.) auf diese Stelle(n) Problemzonen (bspw. Undichtigkeit der Verbindung) provozieren.

Außerdem offenbart die Druckschrift: "US-A 5,131,613" einen Kabelbinder für die Bündelung oder Befestigung von Leitungen, der einen Kabelbinderkopf für die Aufnahme eines biegeelastischen Kabelbinderbandes, das am Kabelbinderkopf befestigt ist, umfasst, wobei der Kabelbinderkopf eine Auflagefläche aufweist, die aus einer ersten und einer zweiten ebenen Teilanlagefläche, die nebeneinander liegen und zueinander abgeschrägt sind, zusammengesetzt ist, derart, dass die Ebenen der beiden Teilanlageflächen einen Anlagewinkel einschließen. Dabei stellt der Teil des Kabelbinderkopfes, dem das Kabelbinderband entspringt, auch eine ebene Anlagefläche dar, die unter einem Winkel in die beiden seitlichen Anlageflächen mündet. Es bleibt zu ergänzen, dass damit der Fachwelt eine Lösung für einen Kabelbinder vorgeschlagen wird, nach deren Lösungsvorschlag randseitlich der Deckfläche des Kabelbinderkopfes zwei lotrecht zur Deckfläche angeordnete Seitenwände angesetzt sind, die sich im Abstand parallel(flächig) gegenüberstehen, welche gewissermaßen einen Anlagefuß [für die zu befestigende(n) Leitung(en)] verkörpern, weiche zu einer Art Schiene verlängert sind, in der das Kabelbinderband verlaufen kann. Dabei wird die einzelne Seitenwand des Kabelbinderkopfes durch eine lotrecht der Deckfläche angesetzte erste Seitenwand, der eine lotrecht zur Deckfläche angeordnete zweite Seitenwand dreieckförmiger Gestalt angesetzt ist, verkörpert, wobei die zweite Seitenwand kathetenseitig dem Wandquerschnitt der ersten Seitenwand angesetzt ist, derart, dass etwa die Hälfte des Wandquerschnittes der ersten Seitenwand belegt ist. Mit diesen (dermaßen integrierten) Seitenwänden werden lotrecht und im Abstand zur Deckfläche des Kabelbinderkopfes befindliche Teilanlageflächen (für die zu befestigende Leitung oder das zu befestigende Leitungsbündel), eine erste Teilanlagefläche und eine zweite Teilanlagefläche, (wandkantenrandseitlich) gebildet, von denen die erste Teilanlagefläche parallel zur Deckfläche liegt, wobei die zweite Teilanlagefläche hypotenusenseitig der ersten Teilanlagefläche abgeschrägt ist, die einen Anlagewinkel einschließen. Es bleibt aber nicht verborgen, dass die lotrecht zur Deckfläche des Kabelbinderkopfes angeordneten beiden (angesetzten) Seitenwände, die jeweils aus einer ersten und einer zweiten Seitenwand integriert sind, aufgrund des Seitenwand-Abstandes keine in sich geschlossene Auflagefläche bilden, da die zwischen den Teilanlageflächen der sich lotrecht gegenüber stehenden Seitenwänden überbrückende Flächenebene, deren Ebene auch einen Flächenverlauf umfassen würde, der demjenigen der Teilanlageflächen entsprechen würde, als Anlagefläche (für die Leitungen) nicht zu Verfügung steht. Selbst wenn man mit einer lotrecht der Deckfläche randseitlich angesetzten ersten (integrierten) Seitenwand und einer zweiten (integrierten) Seitenwand eine erste und eine zweite Auflagefläche erkennen wird, wird man deren Geschlossenheit zu einer (erweiterten) gesamten Auflagefläche, deren Teilanlageflächen zueinander abgeschrägt sind und einen Anlagewinkel einschließen werden, verneinen. Diesem vorgestellten Kabelbinder haften entsprechende Nachteile an, die auf eine nicht vermeidbare Wirksamkeit punktualer Kräfte, die auf jenen den Anlageflächen (der beabstandeten Seitenwände) anliegenden Leitungen während deren Befestigung mit dem Kabelbinderband am Kabelbinderkopf ausgeübt werden und demzufolge Beschädigungen der zu befestigenden Leitungen am Kabelbinder befürchten lassen, zurückgeführt werden. Die Anlage der zu befestigenden Leitung an den beabstandeten Anlageflächen ist eben hier nur teilweise und punktal möglich.

Hinzukommend wird in der Druckschrift: "US-A 4,510,650" ebenfalls ein Kabelbinder beschrieben, der zwei jeweils in zwei Teilanlageflächen unterteilte Anlageflächen aufweist. Jener Kabelbinder ist ein Kombinationselement, der druckschriftlich als Kabelklammerhalterung bezeichnet wird. Bei diesem Kabelbinder liegt die mit einem Kabelbinderband befestigte Leitung nur teilweise und punktual an den beabstandeten Anlageflächen an. Dabei lässt sich das Kabelbinderband sehr aufwendig und kompliziert in der Halterung lösbar befestigen.

Demzufolge liegt der Erfindung die Aufgabe zugrunde, einen gattungsgemäßen Kabelbinder derart zu verbessern, wonach der im befestigten Endzustand eingeschlossene Hohlraum zwischen einer Leitung oder einem Leitungsbündel und der Unterseite des Kabelbinders auf ein Minimum reduziert wird oder sich nahezu abstellen lässt. Er soll die Fähigkeiten eines Hochtemperaturkabelbinders besitzen, wobei mit seiner Anwendung sich herkömmliche Bündel- und Befestigungstechnologien von Leitungen wegen Verringerung des technologischen Aufwandes durch einfache und wirtschaftliche Montage ersetzen lassen.

Diese Aufgabe wird durch die im Anspruch 1 angegebenen Maßnahmen gelöst. In den weiteren Ansprüchen 2 bis 5 sind zweckmäßige Weiterbildungen und Ausgestaltungen dieser Maßnahmen angegeben.

Auch soll der Kabelbinder eine hohe Lebensdauer aufweisen und dafür ausgelegt sein, Temperaturen bis annähernd +260°C zu resistieren. Hierzu werden im Anspruch 6 zweckmäßige Maßnahmen unterbreitet.

Die Erfindung ist in einem Ausführungsbeispiel anhand der beigefügten Zeichnungen näher erläutert. Es zeigen
- Fig. 1: einen Kabelbinder herkömmlicher Art;
- Fig. 2: einen Kabelbinder verbesserter Art;
- Fig. 2a: den Kabelbinder nach Fig. 2 mit gestrecktem Kabelbinderband;
- Fig. 3: den Kabelbinder nach Fig. 2 mit Darstellung verschiedener zu befestigenden Leitungsdurchmesser.

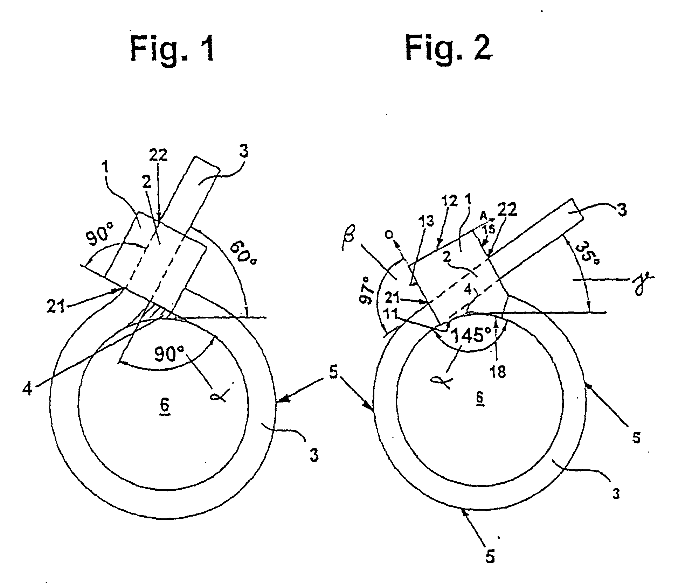

In der Fig. 1 wird der herkömmlich im Flugzeugbau verwendete Kabelbinder für die elektrische Leitungs- bzw. Leitungsbündelbefestigung gezeigt, wie er vorab im Einleitungsteil gewürdigt wird. Es handelt sich dabei um einen Kabelbinder, der zwar den gültigen Flugzeugvorschriften genügt, dessen Einsatz - aufgrund seiner Materiaibeschaffenheit aus Polyamid - nur unter Temperaturen von -55°C bis +135°C erlaubt wird. Aufgrund seiner keineswegs höheren Temperarurbelastung und auch seiner Nichteignung für besondere Ausführungen von genannten Installationen, die am Beispiel von Leitungen für / in Temperaturbereichen bis +260°C (der sogenannten P- und G-Leitungswege) schwieriger auszuführen sind und dementsprechend besonderen Bedingungen der Befestigung im Flugzeug unterliegen, eignet er sich auch deshalb nicht als Installationskomponente für die Befestigung komplizierterer Leitungsabschnitte (der vorgenannten P- und G-Leitungswege), weil diese Installationsbereiche wesentlich höheren Temperaturen (> + 135°C) ausgesetzt sind, und deshalb auch die Leitungen bzw. Leitungsbündel an der vorgesehenen Befestigungsstelle mit Schellen befestigt werden, wobei die Schellen ebenfalls den bekannten Hohlraum 4 einschließen. Aus diesen Gründen mussen diese P- und G-Leitungswege deshalb (aufwendiger) mit Schellen (und teilweise) in Verbindung mit besonderen Halterungskomponenten (in Abhängigkeit vom Einbauort) befestigt werden. Deswegen finden die Kabelbinder auch im Klimabereich eines Flugzeuges - aufgrund der nicht ausreichenden Temperaturbelastbarkeit und des bemängelten Hohlraumeinschlusses - keine Verwendung.

Der für die Bündelung oder Befestigung von elektrischen Leitungen traditionell eingesetzte Kabelbinder besteht aus einem Kabelbinderkopf 1, der die Aufnahme des Kabelbinderbandes 3, das am Kabelbinderkopf 1 befestigt ist, realisiert. Aus der Seitenansicht nach der Fig. 1 läßt sich erkennen, daß der Kabelbinderkopf 1 eine Quader- bzw. Würfelform besitzt, dem mittig der und lotrecht zur Grundfäche eine bis zur Deckfläche durchgehende Öffnung 2, die dem Querschnitt des Kabelbinderbandes 3 (unter Vernachlässigung der Verzahnung) angepaßt ist, ausgenommen ist.

Das Kabelbinderband 3 ist (mit einem Ende) unterhalb der rechten Seitenfläche (aus dem Blick der Seitenansicht) rechtwinklig zur Achse der Öffnung 2 am Kabelbinderkopfes 1 befestigt. Demnach befindet sich die Öffnung 2 zum Verschließen dieses Kabelbinders im Winkel von 90° zum Anschluß bzw. zur Verbindung des Kabelbinderbandes 3 am Kabelbinderkopf 1. Dabei würde eine am Kabelbinderband 3 nahe dem Austritt 22 des Kabelbinderkopfes 1 in Achsenrichtung der Öffnung 2 (aus dem Blick der Seitenansicht) seitlich rechts angelegte (fiktive) Tangente und eine weitere Tangente, die der nicht bedeckten Oberfläche der (des) [fiktiv befestigten] Leitung (Rohres) angelegt ist, einen 60°- Winkel einschließen.

Wird nun das Kabelbinderband 3 einer (nicht dargestellten) Leitung oder einem Rohr [mit dem (der) fiktiv angenommenen Querschnitt (Querschnittsfläche 6)] ummantelt und dem (an der Grundfläche des Kabelbinderkopfes 1 befindlichen) Eintritt 21 (Eintrittsöffnung) eingeführt, danach durch die Öffnung 2 bis außerhalb des (an der Deckfläche des Kabelbinderkopfes 1 befindlichen) Austritts 22 (Austrittsöffnung) geschoben und danach durch eine manuell (handwerklich) beeinflußbare und innerhalb der durchgehenden Öffnung 2 stattfindende (nicht näher beschriebene) Verzahnung am Umfang der Leitung oder des Rohres befestigt, so wird der bereits vorbeschriebene Hohlraum 4 (mit einem nicht zu vernachlässigen) dreieckigen Querschnitt auftreten. Der Anlazewinkel α, der (allgemein) dem Verhältnis eines kreisförmigen Leitungsquerschnittes einer dem Kabelbinderkopf 1 anliegenden Leitung oder des kreisgenäherten Bündelquerschnittes mehrerer dem Kabelbinderkopt 1 anliegenden gebündelten Leitungen zur Anlagetläche des Kabelbinderkopfes 1 angepaßt ist, beträgt bei einem dermaßen eingesetzten Kabelbinder (etwa) 90°, so daß dem zu fixierenden (befestigenden) Querschnitt Grenzen gesetzt sind.

Bei dieser Befestigungsart wird eine Schwachstelle (bspw. die eingangs erwähnte Undichtigkeit der Verbindung an der Befestigungsstelle) provoziert, die durch das unvermeidbaren Einwirken bestimmter Umgebungseinflüsse (Feuchtigkeit und Verschmutzung der Umgebungsluft ect.) auf den nicht bedeckten (freiliegenden) Umfangsbereich der Leitung oder des Rohres verursacht wird.

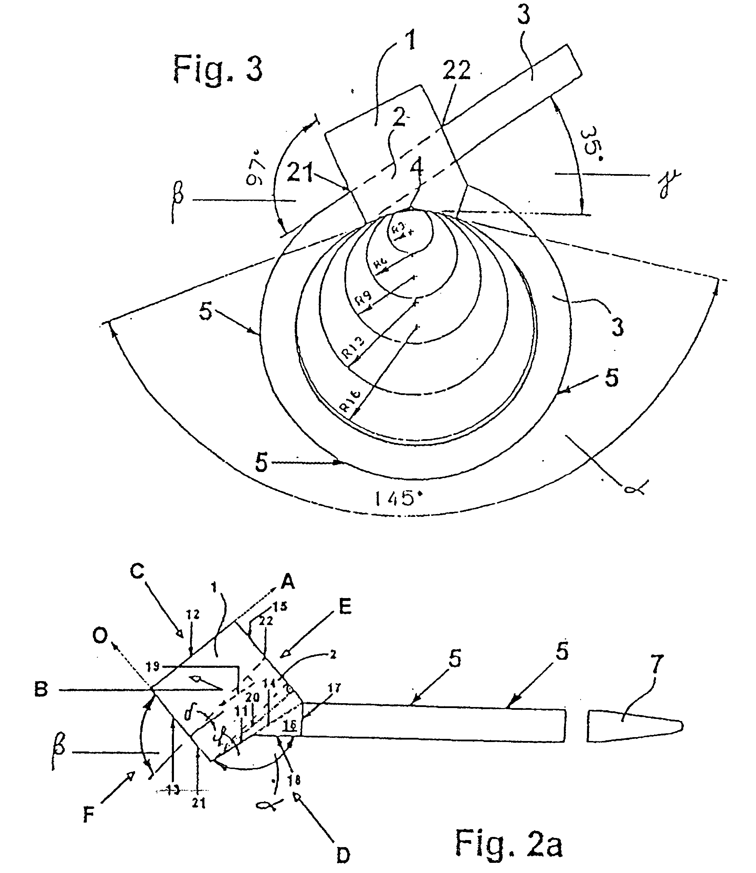

Eine Einschränkung des nämlichen Hohlraumes 4 (zumindestens) auf ein Minimum wird bei der Befestigung von (auch gebündelten) Leitungen und Rohren durch die in den Figuren 2 bis 4 veränderte Gestaltung des Kabelbinderkopfes 1 und der Anordnung des an ihm befestigten Kabelbinderbandes 3 erreicht.

Nach der Fig. 2 besitzt der Kabelbinder den bezüglich Fig. 1 nahezu gleichen Aufbau - aber mit charakteristischen Veränderungen. Danach verfügt der (aus einer Unteransicht D betrachtete) modifizierte Kabelbinderkopf 1 über eine bereichsweise (durch Abschrägung) geteilte Anlagefläche. Die Anlagefläche integriert sich aus einer (in der Fig. 2a anschaulich dargestellten) ersten und einer zweiten ebenflächigen Teilanlagefläche 11, 18, die nebeneinander liegen und zueinander abgeschrägt sind. Es handelt sich dabei um (beispielsweise) rechteckige Teilanlageflächen 11, 18, die aber durch- aus quadratförmig gestaltet sein können (abhängig von der Körperform des Kabelbinderkopfes 1). Die Abschrägung setzt am Übergang der nebeneinander liegenden Rechteck-Seitenlängen der Teilanlageflächen 11, 18 ein. Die Ebenen der beiden Teilanlageflächen 11, 18 schließen den (allgemein vorbeschriebenen) Anlagewinkel α ein, der (aus der Seitenansicht B) nach den Figuren 2 und 2a (etwa) gleich 145° ist. Dieser Anlagewinkel α ist für eine Einzelbefestigung von Leitungen mit einem Durchmesser von 1 mm bis 40 mm, - wie aus der Fig. 3 ersichtlich -, definiert. Für Leitungen mit einem Durchmesser über 40 mm wäre ein Anlagewinkel α bis zu 160 ° einzuhalten. Aus der Fig. 2 kann man außerdem entnehmen, daß der gezeigte Kabelbinderkopf 1 mit (s)einer im Anlagewinkel von α= 145° abgewinkelten Anlagefläche (der Addition der beiden zueinander abgeschrägten Teilanlageflächen 11, 18) der einzelnen Leitung mit ihrer (fiktiven) Querschnittsfläche 6 [allgemein: der zu befestigenden Komponente mit (kreis)rundem Querschnitt] anliegt. Dabei befindet sich das am Kabelbinderkopf 1 befestigte Kabelbinderband 3 dem Querschnitt der Leitung anliegend, das dem Kabelbinderkopf 1 durch eine ihm durchgehende Öffnung 2 nach dem Vorbild der Fig. 1 durchgeschoben wird. Vorgreifend der auf die Fig. 2a bezogenen Ausführungen wird weiter ausgeführt, daß die Achse der durchgehenden Öffnung 2 und eine der vorderen Frontalfläche 13 (vgl. dazu Vorderansicht F nach Fig. 2a) anliegenden (nicht dargestellten) Tangente einen (sogenannten) Eintrittswinkel β von 97° einschließen, wobei der Beginn der Öffnung 2 (als Eintrittsöffnung des Kabelbinderbandes 3 definiert), der als Eintritt 21 bezeichnet wird, (etwa mittig) der Unterkante der [senkrecht aufgespannten (liegenden] vorderen Frontalfläche 13 (vgl. hierzu Fig. 2a) einsetzt und der Abschluß der Öffnung 2 (als Austritts- öffnung des Kabelbinderbandes 3 definiert), der als Austritt 22 bezeichnet wird, an der rückwärtigen Frontalfläche 15 (vgl. hierzu Fig. 2a) abschließt. Die Öffnung 2 wird - nach dem Vorbild der Fig. 2a - demnach mit einer Steigung δ von etwa 7° durch den Kabelbinderkopf 1 geführt, sofern man jeweils einer der rückwärtigen Frontalfläche 15 und einer der fiktiven Grundfläche 20 (vgl. hierzu Fig. 2a) angelegten (nicht dargestellten) Tangente dafür als Basis betrachtet.

Ferner schließen die dem Kabelbinderband 3 nahe dem Austritt 22 seitlich rechts (aus dem Blick der Seitenansicht) und der nicht bedeckten Oberfläche dieser Leitung bzw. dieser zu befestigenden Komponente mit (kreis)rundem Querschnitt jeweils angelegten (nicht dargestellten) Tangenten einen Austrittswinkel γ von 35° ein.

Am Vorbild der Fig. 2a, die den Kabelbinder in der Seitenansicht nach Fig. 2 mit gestrecktem Kabelbinderband 3 wiedergibt, werden weitere zweckmäßige Weiterbildungen und Ausgestaltungen ergänzt.

Da der Kabelbinderkopf 1 beispielgewählt eine quaderförmige Gestalt besitzt, kann man davon ausgehen, daß dessen erste Teilanlagefläche 11 nicht parallel zur Deckfläche 12 des Kabelbinderkopfes 1 liegt. Sie ist vielmehr gegenüber der erwähnten fiktiven Grundfläche 20, die (bei einem Quader bekanntlich) parallel zur Deckfläche 12 des Kabelbinderkopfes 1 verläuft, in einem Flächenwinkel ϕ der fiktiven Grundfläche 20 abgewandt, (das heißt) also - nach unten abgeschrägt. Der Beginn dieser Teilanlagefläche 11 setzt an der Unterkante der vorderen Frontalfläche 13 ein, wobei der Verlauf der Teilauflagefläche 11 sich ebenflächig bis zu der vorerwähnten Abschrägung (Abwinklung) fortsetzt, an der dann im genannten Anlagewinkel von α=145° die zweite Teilanlagefläche 18 bis an der Unterkante der rückwärtigen Frontalfläche 15 ebenflächig verlaufend abschließt.

Man kann weiter davon ausgehen, daß die Anlagefläche des Kabelbinderkopfes 1 zugleich dessen Untersicht D repräsentiert. Würde die Unteransicht D fiktiv eine Anlagefläche repräsentieren, die im Flächenwinkel ϕ der fiktiven Grundfläche 20 abgewandt verläuft und somit keine Abschrägung im Anlagewinkel α aufweist, dann könnte man ferner davon ausgehen, daß die Gesamtfläche dieser Unteransicht D aus der ersten Teilanlagefläche 11 und einer ihr (in einer Ebene liegenden) fiktiv angrenzenden bzw. verlängerten Teilfläche 14 gebildet wird. Folgt man diesen Ausführungen, dann besitzt die reale Unteransicht D des Kabelbinderkopfes 1 (aus der Seitenansicht B nach Fig. 2a beurteilt) eine Gestalt, wonach dann auf dieser fiktiv verlängerten Teilfläche 14 ein dreiseitiger gerader Prismenkörper 16 angeordnet ist, dessen eine Seitenfläche (von insgesamt drei Seitenflächen) mit der fiktiven Teilfläche 14 kongruent verbunden ist. Dabei repräsentiert eine weitere Seitenfläche des Prismenkörpers 16 real die zweite Teilanlagefläche 18 unterhalb dem Kabelbinderkopf 1. Die verbleibende Seitenfläche des Prismenkörpers 16 stimmt danach real mit der Befestigungsfläche 17 des Kabelbinderbandes 3 am Kabelbinderkopf 1 überein.

Aus der Fig. 2a ist ferner der Verzahnungsbereich mittels (angedeuteter) abstehender Verzahnung 5 oberhalb des gestreckt dargestellten Kabelbinderbandes 3 ersichtlich, der nicht bis an das Ende des Laschenansatzes 7 ausgeführt wird. An der Innenwandung der Öffnung 2 befindet sich eine (nicht gezeigte) weitere Verzahnung 19, die mit der Verzahnung 5 des Kabelbinderbandes 3 nach geschehenem Einschub und Austritt des Kabelbinderbandes 5 durch manuelle Beeinflußung verzahnen wird. Es wird ergänzt, daß der Bandquerschnitt des Kabelbinderbandes 3 (wie dargestellt) mit dem Flächenmaß der anderen Seitenfläche 17 (Befestigungsfläche) des Kabelbinderkopfes 1 übereinstimmen wird. Außerdem wird aus der Fig. 2a die Vorderansicht F, die Seitenansicht B, die Draufsicht C die Unteransicht D und die Rückansicht E des Kabelbinderkopfes 1 sichtbar.

In der Fig. 3 wird besonders die Aufmerksamkeit auf die Anlagefläche des Kabelbinders gelenkt, der bezüglich den Figuren 2 und 2a vorbeschrieben wurde. Wie vorab schon angedeutet, können mit diesem Kabelbinder - aufgrund der geschilderten charakteristischen Gestaltung der Anlagefläche mit der Abschrägung im Anlagewinkel - verschiedene Leitungsdurchmesser befestigt bzw. gebündelt werden, die (bei einem α=145°) für einzeln zu befestigende Leitungsdurchmesser von 1 mm bis 40 mm besonderen praktischen Nutzen besitzt. Aus der Fig. 3 kann man die verschiedenen kreisförmigen Leitungs- bzw. Rohrdurchmesser (hier: auf den Radius bezogen: für R3, R6, R9, R13, R16) ersehen, für die eine im Anlagewinkel von α=145° realisierte Auflage an der Anlagefläche des Kabelbinderkopfes 1 optimal erscheint. Bei sehr größeren Durchmessern wird ein Anlagewinkel α im Winkelbereich von 145° bis 160° gewählt. Bei einem deratigen Anlagewinkel α reduziert sich die Bildung des eingeschlossenen Hohlraumes 4 und verbessert sich die Dichtheit der Befestigung, beispielsweise eines Rohres, die mit in Abhängigkeit der Anlagefläche des Kabelbinderkopfes 1 (der Größe des Kabelbinders) und dem Durchmesser der zu befestigenden Kreis- bzw. kreisförmigen Komponente steht. Damit der Kabelbinder auch als Hochtemperatur-Kabelbinders innerhalb von Temperatur-Bereichen von +135° C bis +260° C eingesetzt werden kann, besteht er aus einem thermoplastischen Material, für das Polyetheretherketon, beispielsweise "Vitrex" PEEK in unverstärkter Ausführung, sich dafür besonders eignet.

Bei Einsatz des geschilderten Kabelbinder mit einem derartigen Material würde sich eine Kabelbindertechnologie in Temperaturbereichen bis +260° C umsetzten lassen, mit der die bisher übliche Schellenbefestigung von Leitungen und Rohren abgelöst wird.

Die bisher verwendeten Kabelbinder-Zangen ließen sich weiter benutzen, wodurch eine Neuanschaffung von Werkzeug entfallen würde. Der vorgestellte PEEK-Kabelbinder würde im Flugzeugbau besonders bei den genannten P- und G-Routen, in VU's / VE's, in besonderen Triebwerksbereichen (APU-Raum, Pylon-Bereich), an Triebwerken zur Leitungs-, Rohr-, Schlauchbefestigung entsprechende Anwendung finden. Weitere mögliche Einsatzgebiete des PEEK-Kabelbinders als Komponente im Energieerzeugungsbereich wären der Maschinen- und Kraftwerksbau.

Nach den Figuren 2, 2a und 3 wird dem Betrachter demnach ein Kabelbinder für die Bündelung oder Befestigung von Leitungen vorgestellt, der einen Kabelbinderkopf 1 für die Aufnahme eines biegeelastischen Kabelbinderbandes 3 umfasst, das am Kabelbinderkopf 1 befestigt ist. Der Kabelbinderkopf 1 ist ein quader- oder würfelähnlicher Körper, dem an eine Deckfläche 12 eine Abszisse A gelegt ist, auf der eine Ordinate O senkrecht steht, die, aus einer Vorderansicht F des Kabelbinderkopfes 1 betrachtet, an eine ebenflächige vordere Frontalfläche 13 des Kabelbinderkopfes 1 gelegt ist. Dabei haben die Abszisse A und die Ordinate O einen gemeinsamen Koordinatenanfangspunkt, der auf einer vorderen Oberkante des Kabelbinderkopfes 1, welche die Deckfläche 12 und die vordere Frontalfläche 13 begrenzt, liegt. Außerdem ist, aus einer Seitenansicht des Kabelbinderkopfes 1 betrachtet, ordinatenparallel verlaufend zur vorderen Frontalfläche 13 eine ebenflächige rückseitige Frontalfläche 15 gelegen, wobei die vordere und die rückseitige Frontalfläche 13, 15 im abszissenbezogenen Abstand der Deckfläche 12 angeordnet sind. Andererseits weist der Kabelbinderkopf 1 eine Anlagefläche aufweist, die aus einer ersten und einer zweiten ebenen Teilanlagefläche 11, 18, die nebeneinander liegen und zueinander abgeschrägt sind, zusammengesetzt ist. Die Anordnung ist derart, wonach die Ebenen der beiden Teilanlageflächen 11, 18 einen Anlagewinkel α einschließen, wobei die erste Teilanlagefläche 11 nicht abszissenparallel zur Deckfläche 12 des Kabelbinderkopfes 1 liegt, sondern in einem Flächenwinkel ϕ, den die erste Teilanlagefläche 11 und eine abszissenparallel verlaufende fiktive Grundfläche 20 einschließen, der fiktiven Grundfläche 20 abgewandt ist, Letztere schließt an einer vorderen Unterkante des Kabelbinderkopfes 1, welche die vordere Unterkante der ersten Teilanlagefläche 11 und die vordere Frontalfläche 13 begrenzt, ab. Der ersten Teilanlagefläche 11 ist eine Teilfläche 14 im Flächenwinkel ϕ verlängert, die mit der ersten Teilanlagefläche 11 in einer Ebene liegt, derart, dass die Teilfläche 14, aus einer Rückansicht E des Kabelbinderkopfes 1 betrachtet, an der rückseitigen Frontalfläche 15 des Kabelbinderkopfes 1 begrenzt ist, auf der eine erste Seitenfläche eines dreiseitigen geraden Prismenkörpers 16 angeordnet ist, die der Teilfläche 14 kongruent verbunden ist, so dass, aus einer Unteransicht des Kabelbinderkopfes 1 betrachtet, die zweite Teilanlagefläche 18 durch eine zweite Seitenfläche des Prismenkörpers 16 gebildet ist.

Hinzukommend wird ergänzt, dass an einer dritten Seitenfläche 17 des Prismenkörpers 16, die außerhalb des Bereiches der Anlagenfläche liegt, das Kabelbinderband 3 befestigt ist, wobei der Bandquerschnitt des Kabelbinderbandes 3 der dritten Seitenfläche 17 kongruent verbunden ist.

Es ist vorgesehen, dass die erste und zweite Teilanlagefläche 11, 18 eine Rechteck-Fläche sind, die jeweils die halbe Fläche der Anlagefläche belegen. Eine Rechteck-Seitenlänge der ersten Teilanlagefläche 11 stimmt mit der vorderen Unterkante des Kabelbinderkopfes 1 überein, wobei an der ihr gegenüberliegenden und parallel verlaufenden Rechteck-Seitenlänge, die ihr mit der Rechteck-Seitenbreite beabstandet ist, die im Anlagewinkel α abgeschrägte zweite Teilanlagefläche 18, die eine Rechteck-Fläche ist, sich anschließt.

An der vorderen Unterkante des Kabelbinderkopfes 1 ist eine Öffnung 2 angeordnet, die an der vorderen Frontalfläche 13 beginnend und annähernd parallel verlaufend der ersten Teilanlagefläche 11 durch den Kabelbinderkopf 1 bis an die rückseitige Frontalfläche 15 geführt ist.

Die dem Kabelbinderkopf 1 durchgehende Öffnung 2 ist gegenüber der fiktiven Grundfläche 20 mit einer Steigung im Winkel δ von 7 Grad ausgeführt, so dass das Kabelbinderband 3 durch die an der vorderen Unterkante des Kabelbinderkopfes 1 einsetzende Öffnung 2 unter einem Winkel von 7 Grad, den die Achse der Öffnung 2 mit einer parallelverschobenen Abszisse einschließt, sich führen und innerhalb der Öffnung 2 mittels einer ihm aufsitzenden außenliegenden Verzahnung 5 an der mit einer Zahnung versehenen Innenwandung der Öffnung 2 befestigen lässt.

Außerdem wird vorgeschlagen, dass der Kabelbinderkopf 1 und das Kabelbinderband 3 aus einem für Temperaturbereiche größer 135 Grad Celsius bis 260 Grad Celsius thermoplastischen Material in unverstärkter Ausführung besteht, das Polyetheretherketon ist.

### Bezugszeichen

- 1: Kabelbinderkopf
- 11, 18: Teilanlagefläche (der Anlagefläche des Kabelbinderkopfes 1)
- 12: Deckfläche
- 13: Frontalfläche, vordere
- 14: Teilfläche, fiktiv angrenzend bzw. verlängert (der Teilanlagefläche 11)
- 15: Frontalfläche, rückseitig
- 16: Prismenkörper
- 17: Seitenfläche (Befestigungsfläche)
- 19: Verzahnung (an der Innenwandung der Öffnung 2)
- 20: Grundfläche, fiktiv

- 2: Öffnung, durchgehend
- 21: Eintritt (Eintrittsöffnung)
- 22: Austritt (Austrittsöffnung)
- 3: Kabelbinderband
- 4: Hohlraum
- 5: Verzahnung (des Kabelbinderbandes 3)
- 6: Querschnitts- bzw. Bündelflächefläche
- 7: Laschenansatz (des Kabelbinderbandes 3)

- α: Winkel; Anlagewinkel
- β: Winkel; Eintrittswinkel
- γ: Winkel; Austrittswinkel
- δ: Winkel; Steigung
- ϕ: Winkel; Flächenwinkel

- F: Vorderansicht (des Kabelbinderkopfes 1)
- B: Seitenansicht (des Kabelbinderkopfes 1)
- C: Draufsicht (des Kabelbinderkopfes 1)
- D: Unteransicht (des Kabelbinderkopfes 1)
- E: Rückansicht (des Kabelbinderkopfes 1)

- R: Radius (auf den kreisförmigen Durchmesser der Querschnitts- bzw. Bündelfläche 6 bezogen)
- A: Abszisse
- O: Ordinate

## Patentansprüche

1. Kabelbinder für die Bündelung oder Befestigung von Leitungen, umfassend einen Kabelbinderkopf (1) für die Aufnahme eines biegeelastischen Kabelbinderbandes (3), das am Kabelbinderkopf (1) befestigt ist, wobei der Kabelbinderkopf (1) ein quader- oder würfelähnlicher Körper ist, dem an eine Deckfläche (12) eine Abszisse (A) gelegt ist, auf der eine Ordinate (O) senkrecht steht, die, aus einer Vorderansicht (F) des Kabelbinderkopfes (1) betrachtet, an eine ebenflächige vordere Frontalfläche (13) des Kabelbinderkopfes (1) gelegt ist, dabei die Abszisse (A) und die Ordinate (O) einen gemeinsamen Koordinatenanfangspunkt haben, der auf einer vorderen Oberkante des Kabelbinderkopfes (1), welche die Deckfläche (12) und die vordere Frontalfläche (13) begrenzt, liegt, außerdem, aus einer Seitenansicht (B) des Kabelbinderkopfes (1) betrachtet, ordinatenparallel verlaufend zur vorderen Frontalfläche (13) eine ebenflächige rückseitige Frontalfläche (15) gelegen ist, wobei die vordere und die rückseitige Frontalfläche (13, 15) im abszissenbezogenen Abstand der Deckfläche (12) angeordnet sind, andererseits der Kabelbinderkopf (1) eine Anlagefläche aufweist, die aus einer ersten und einer zweiten ebenen Teilanlagefläche (11, 18), die nebeneinander liegen und zueinander abgeschrägt sind, zusammengesetzt ist, derart, dass die Ebenen der beiden Teilanlageflächen (11, 18) einen Anlagewinkel (α) einschließen, wobei die erste Teilanlagefläche (11) nicht abszissenparallel zur Deckfläche (12) des Kabelbinderkopfes (1) liegt, sondern in einem Flächenwinkel (ϕ), den die erste Teilanlagefläche (11) und eine abszissenparallel verlaufende fiktive Grundfläche (20) einschließen, der fiktiven Grundfläche (20) abgewandt ist, wobei letztere an einer vorderen Unterkante des Kabelbinderkopfes (1), welche die vordere Unterkante der ersten Teilanlagefläche (11) und die vordere Frontalfläche (13) begrenzt, abschließt,
**dadurch gekennzeichnet, dass** der ersten Teilanlagefläche (11) eine Teilfläche (14) im Flächenwinkel (ϕ) verlängert ist, die mit der ersten Teilanlagefläche (11) in einer Ebene liegt, derart, dass die Teilfläche (14), aus einer Rückansicht (E) des Kabelbinderkopfes (1) betrachtet, an der rückseitigen Frontalfläche (15) des Kabelbinderkopfes (1) begrenzt ist, auf der eine erste Seitenfläche eines dreiseitigen geraden Prismenkörpers (16) angeordnet ist, die der Teilfläche (14) kongruent verbunden ist, so dass, aus einer Unteransicht (D) des Kabelbinderkopfes (1) betrachtet, die zweite Teilanlagefläche (18) durch eine zweite Seitenfläche des Prismenkörpers (16) gebildet ist.

2. Kabelbinder nach Anspruch 1, **dadurch gekennzeichnet, dass** an einer dritten Seitenfläche (17) des Prismenkörpers (16), die außerhalb des Bereiches der Anlagenfläche liegt, das Kabelbinderband (3) befestigt ist, wobei der Bandquerschnitt des Kabelbinderbandes (3) der dritten Seitenfläche (17) kongruent verbunden ist.

3. Kabelbinder nach Anspruch 1, **dadurch gekennzeichnet, dass** die erste und zweite Teilanlagefläche (11, 18) eine Rechteck-Fläche sind, die jeweils die halbe Fläche der Anlagefläche belegen, und eine Rechteck-Seitenlänge der ersten Teilanlagefläche (11) mit der vorderen Unterkante des Kabelbinderkopfes (1) übereinstimmt, wobei an der ihr gegenüberliegenden und parallel verlaufenden Rechteck-Seitenlänge, die ihr mit der Rechteck-Seitenbreite beabstandet ist, die im Anlagewinkel (α) abgeschrägte zweite Teilanlagefläche (18), die eine Rechteck-Fläche ist, sich anschließt.

4. Kabelbinder nach Anspruch 1, **dadurch gekennzeichnet, dass** an der vorderen Unterkante des Kabelbinderkopfes (1) eine Öffnung (2) angeordnet ist, die an der vorderen Frontalfläche (13) beginnend und annähernd parallel verlaufend der ersten Teilanlagefläche (11) durch den Kabelbinderkopf (1) bis an die rückseitige Frontalfläche (15) geführt ist.

5. Kabelbinder nach den Ansprüchen 1 und 4, **dadurch gekennzeichnet, dass** die dem Kabelbinderkopf (1) durchgehende Öffnung (2) gegenüber der fiktiven Grundfläche (20) mit einer Steigung im Winkel (δ) von 7 Grad ausgeführt ist, so dass das Kabelbinderband (3) durch die an der vorderen Unterkante des Kabelbinderkopfes (1) einsetzende Öffnung (2) unter einem Winkel von 7 Grad, den die Achse der Öffnung (2) mit einer parallelverschobenen Abszisse einschließt, sich führen und innerhalb der Öffnung (2) mittels einer ihm aufsitzenden außenliegenden Verzahnung (5) an der mit einer Zahnung versehenen Innenwandung der Öffnung (2) befestigen lässt.

6. Kabelbinder nach Anspruch 1, **dadurch gekennzeichnet, dass** der Kabelbinderkopf (1) und das Kabelbinderband (3) aus einem für Temperaturbereiche größer 135 Grad Celsius bis 260 Grad Celsius thermoplastischen Material in unverstärkter Ausführung besteht, das Polyetheretherketon ist.

## Claims

1. A cable tie for bundling or fastening wires, comprising a cable tie head (1) for accommodating a flexible cable tie strap (3), which is attached to the cable tie head (1), the cable tie head (1) being a cuboid or cube-like body, onto a top face (12) of which there is applied an abscissa (A), perpendicular to which there extends an ordinate (O), which, when the cable tie head (1) is viewed from the front (F), is applied onto a plane front frontal face (13) of the cable tie head (1), the abscissa (A) and the ordinate (O) having a common coordinate starting point, which lies on a front upper edge of the cable tie head (1), which defines the top face (12) and the front frontal face (13), a plane rear frontal face (15) additionally extending parallel to the ordinate and to the front frontal face (13), when the cable tie head (1) is viewed from the side (B), the front and rear frontal faces (13, 15) being spaced by an abscissa-related distance of the top face (12), on the other hand the cable tie head (1) having a bearing face which is composed of a first and a second flat partial bearing face (11, 18), which lie next to one another and are inclined towards one another, in such a way that the planes of the two partial bearing faces (11, 18) form a bearing angle (α), the first partial bearing face (11) not lying parallel to the abscissa or the top face (12) of the cable tie head (1), but rather being directed away from a hypothetical base face (20) extending parallel to the abscissa at a plane angle (ϕ) formed by the first partial bearing face (11) and the hypothetical base face (20), the latter terminating at a front lower edge of the cable tie head (1), which defines the front lower edge of the first partial bearing face (11) and the front frontal face (13),
**characterised in that** the first partial bearing face (11) is extended by a partial face (14) at the plane angle (ϕ), which partial face (14) lies in a plane with the first partial bearing face (11) in such a way that the partial face (14), when the cable tie head (1) is viewed from the rear (E), is delimited at the rear frontal face (15) of the cable tie head (1), on which rear frontal face (15) a first side face of a three-sided right prism body (16) is arranged, which is connected congruently to the partial face (14), such that, when the cable tie head (1) is viewed from the bottom (D), the second partial bearing face (18) is formed by a second side face of the prism body (16).

2. A cable tie according to claim 1, **characterised in that** the cable tie strap (3) is attached to a third side face (17) of the prism body (16), which lies outside the area of the bearing face, wherein the cross section of the cable tie strap (3) is connected congruently to the third side face (17).

3. A cable tie according to claim 1, **characterised in that** the first and second partial bearing faces (11, 18) are rectangle faces, which each occupy half the surface area of the bearing face, and a rectangle side length of the first partial bearing face (11) corresponds with the front lower edge of the cable tie head (1), wherein the second partial bearing face (18), inclined at the bearing angle (α) and which is a rectangle face, adjoins the rectangle side length opposite thereto and extending parallel thereto, which is spaced therefrom by the rectangle side width.

4. A cable tie according to claim 1, **characterised in that** an opening (2) is arranged at the front lower edge of the cable tie head (1), which opening (2) is guided so as to start at the front frontal face (13) and extend approximately parallel to the first partial bearing face (11) through the cable tie head (1) as far as the rear frontal face (15).

5. A cable tie according to claims 1 and 4, **characterised in that** the opening (2) passing through the cable tie head (1) exhibits an inclination at an angle (δ) of 7 degrees relative to the hypothetical base face (20), such that the cable tie strap (3) may be guided through the opening (2), starting at the front lower edge of the cable tie head (1), at an angle of 7 degrees, which the axis of the opening (2) forms with a parallel-shifted abscissa, and be fastened within the opening (2) to the inner wall of the opening (2) provided with teeth by means of an external toothing (5) located on said strap.

6. A cable tie according to claim 1, **characterised in that** the cable tie head (1) and the cable tie strap (3) consist of a material in unreinforced grade which is thermoplastic for temperature ranges of greater than 135 degrees Celsius to 260 degrees Celsius, said material being polyetherether ketone.

## Revendications

1. Serre-câble pour botteler ou fixer des lignes, comprenant une tête de serre-câble (1) pour recevoir une bande de serre-câble (3), qui est fixée à le tête de serre-câble (1), la tête de serre-câble (1) étant un corps en forme de parallélépipède ou de cube, dont une face de recouvrement (12) porte une abscisse (A) sur laquelle est appliquée perpendiculairement une ordonnée (O) qui, en vue avant (F) de la tête de serre-câble, est située sur une face frontale avant (13) à surface plane de la tête de serre-câble (1), serre-câble dans lequel l'abscisse (A) et l'ordonnée (O) ont un point d'origine commun de coordonnées, qui se trouve sur un bord supérieur avant de la tête de serre-câble (1), qui délimite la face de recouvrement (12) et la face frontale avant (13), tandis qu'en outre, en vue latérale (B) de la tête de serre-câble (1), une face frontale arrière (15) à surface plate est disposée parallèlement à l'ordonnée s'étendant sur la face frontale avant (13), dans lequel les faces frontales avant et arrière (13, 15) sont agencées à la distance rapportée à l'abscisse de la face de recouvrement, tendis que, d'autre part, la tête de serre-câble (1) présente une face d'appui qui est composée d'une première et d'une deuxième face d'appui partielle plate (11, 18) qui se trouvent l'une à côté de l'autre et forment conjointement un biseau de sorte que les plans des deux faces d'appui partielles incluent un angle d'appui (α), dans lequel la première face d'appui partielle (11) n'est pas parallèle en abscisse à la face de recouvrement (12) de la tête de serre-câble (1), mais est opposée, sous un angle plat (ϕ) que forment la première face d'appui partielle (11) et une face de base fictive (20) s'étendant parallèlement à l'abscisse, à la surface de base fictive (20), dans lequel celle-ci se termine sur un bord inférieur avant de la tête de serre-câble (1), qui délimite le bord inférieur avant de la première face d'appui partielle (11) et la face frontale avant (13),
**caractérisé en ce que** la première face d'appui partielle (11) est prolongée par une face partielle (14) faisant l'angle plat (ϕ), qui se trouve avec la première face d'appui partielle (11) dans un plan de sorte que la face partielle (14), en vue arrière (E) de la tête de serre-câble (1), est délimitée sur la face frontale arrière (15) de la tête de serre-câble (1), sur laquelle est agencée une première face latérale d'un corps prismatique droit triangulaire (16), qui est relié en congruence avec la face partielle (14) de sorte que, en vue inférieure (D) de la tête de serre-câble (1), la seconde face d'appui partielle (18) soit formée par une deuxième surface latérale du corps prismatique (16).

2. Serre-câble selon la revendication 1, **caractérisé en ce que** la bande de serre-câble (3) est fixée sur une troisième surface latérale (17) du corps prismatique (16), qui se trouve en dehors de la zone de la face d'appui, la section transversale de la bande (3) du serre-câble étant reliée en congruence avec la troisième face latérale (17).

3. Serre-câble selon la revendication 1, **caractérisé en ce que** les première et seconde faces d'appui partielles (11, 18) sont des faces de rectangle, qui occupent respectivement la demi-surface de la face d'appui, et une longueur latérale de rectangle de la première face d'appui partielle (11) coïncide avec le bord inférieur avant de la tête de serre-câble (1), serre-câble dans lequel la seconde face d'appui partielle (18) biseauté sous l'angle d'appui (α), qui est une face de rectangle, se raccorde à la longueur latérale de rectangle en regard du bord et s'étendant parallèlement à celui-ci, ladite longueur étant espacée de celui-ci par la largeur latérale du rectangle.

4. Serre-câble selon la revendication 1, **caractérisé en ce que**, sur le bord inférieur avant de la tête de serre-câble (1), est ménagée une ouverture (2) qui est guidée en partant de la face frontale avant (13) et en s'étendant presque parallèlement à la première face d'appui partielle (11) à travers la tête de serre-câble (1) jusqu'à la surface frontale arrière (15).

5. Serre-câble selon les revendications 1 et 4, **caractérisé en ce que** l'ouverture (2) passant à travers la tête de serre-câble (1) est ménagée par rapport à la surface de base fictive (20) avec une augmentation de l'angle (δ) de 7 degrés, si bien que la bande de serre-câble (3) est acheminée à travers l'ouverture (2) démarrant sur le bord inférieur avant de la tête de serre-câble (1) sous un angle de 7 degrés, que l'axe de l'ouverture (2) inclut avec une abscisse décalée parallèlement, et peut se fixer à l'intérieur de l'ouverture (2) sur la paroi interne de l'ouverture (2) pourvue d'une denture au moyen d'une denture externe (5) s'appuyant sur elle.

6. Serre-câble selon la revendication 1, **caractérisé en ce que** la tête de serre-câble (1) et la bande de serre-câble (3) sont constituées d'un matériau thermoplastique dans des plages de températures supérieures à 135 à 260°C en version non renforcée, qui est une polyéther-éthercétone.
